# FASCICULE DE BREVET EUROPEEN

(11) **EP 2 222 772 B1**
(45) Date de publication et mention de la délivrance du brevet: **03.04.2013**
(21) Numéro de dépôt: 08872850.6
(22) Date de dépôt: 18.12.2008
(51) Int. Cl.: C08K 5/00, C08K 5/56, C08G 77/08, C08J 3/24

(54) **COMPOSITION ORGANOPOLYSELOXANIQUE VULCANISABLE A TEMPERATURE AMBIANTE EN ELASTOMERE ET NOUVEAUX CATALYSEURS DE POLYCONDENSATION D'ORGANOPOLYSILOXANES**
BEI ZIMMERTEMPERATUR ZU EINEM ELASTOMER VULKANISIERBARE ORGANOPOLYSILOXANZUMMENSETZUNG SOWIE NEUARTIGE KATALYSATOREN ZUR POLYKONDENSATION VON ORGANOPOLYSILOXANEN
ORGANOPOLYSILOXANE COMPOSITION ROOM TEMPERATURE VULCANIZABLE TO ELASTOMER AND NEW ORGANOPOLYSILOXANE POLYCONDENSATION CATALYSTS

(30) Priorité: 20.12.2007 FR 0708919
(43) Date de publication de la demande: 01.09.2010
(73) Titulaire: Bluestar Silicones France, 69486 Lyon (FR)
(72) Inventeur: MALIVERNEY, Christian, F-69690 Saint Julien sur Bibost (FR); BLANC, Delphine, F-69007 Lyon (FR); FERHAT, Rachid, F-38200 Vienne (FR)
(74) Mandataire: Mekki, Boualem
(86) Numéro de dépôt international: PCT/FR2008/001773
(87) Numéro de publication internationale: WO 2009/106723

(56) Documents cités:
- FR-A- 2 856 694
- GB-A- 2 270 522

## Description

La présente invention concerne une composition organopolysiloxanique vulcanisable dès la température ambiante en élastomère réticulant par polycondensation et ne contenant pas de catalyseurs à base d'alkylétain qui présentent des problèmes de toxicité.

L'invention concerne aussi de nouveaux catalyseurs de polycondensation dans la chimie des silicones et leurs utilisations comme catalyseurs de la réaction de polycondensation d'organopolysiloxanes.

Plus particulièrement, la présente invention vise des compositions présentées avant emploi sous forme de 2 composantes (RTV-2).

Les formulations des élastomères réticulant par polycondensation font généralement intervenir une huile silicone, généralement un polydiméthylsiloxane, à terminaisons hydroxylées, éventuellement préfonctionnalisées par un silane de façon à présenter des extrémités alcoxy, un réticulant, un catalyseur de polycondensation, classiquement un sel d'étain ou un titanate d'alkyle, une charge de renfort et d'éventuels autres additifs comme des charges de bourrage, des promoteurs d'adhérence, des colorants, des agents biocides, etc.

Ces compositions organopolysiloxaniques vulcanisables dès la température ambiante sont bien connues et sont classées en 2 groupes distincts: les compositions monocomposantes (RTV-1) et les compositions bicomposantes (RTV-2).

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomérique.

Généralement, les compositions monocomposantes (RTV-1) réticulent quand elles sont exposées à l'humidité de l'air, c'est-à-dire qu'elles ne peuvent réticuler dans un milieu en confiné. Par exemple, les compositions silicones monocomposantes utilisées comme mastics ou adhésifs réticulent à froid suivant un mécanisme d'hydrolyse de fonctions réactives du type acétoxysilane, cétiminoxysilane, alcoxysilane..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Généralement, la cinétique des réactions de polycondensation est extrêmement lente; ces réactions sont donc catalysées par un catalyseur approprié. Comme catalyseurs qui sont utilisés; on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité.

Quand aux compositions bicomposantes, elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398. Ces compositions comportent essentiellement 4 ingrédients différents:
- un polymère réactif α,ω-dihydroxydiorganopolysiloxane,
- un agent de réticulation, généralement un silicate ou un polysilicate,
- un catalyseur à l'étain, et
- de l'eau.

Le plus souvent, le catalyseur de condensation est à base d'un composé organique d'étain. En effet, de nombreux catalyseurs à base d'étain ont déjà été proposés comme catalyseur de réticulation de ces RTV-2. Les composés les plus utilisés sont les carboxylates d'alkylétain tels que le monooléate de tributyltain ou les dicarboxylates de dialkylétain tels que le dilaurate de dibutylétain, le diacétate de dibutylétain ou le dilaurate de diméthylétain (voir l'ouvrage de Noll "Chemistry and Technology of silicones" page 337, Académie Press, 1968 - 2ème édition ou les brevets EP 147 323 ou EP 235 049).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Les catalyseurs à base de titane, également très employés dans les RTV-1, présentent cependant un inconvénient majeur: ils ont une cinétique plus lente que les catalyseurs à base d'étain. De plus, ces catalyseurs ne sont pas utilisables dans les RTV-2 du fait de problèmes de gélification.

D'autres catalyseurs sont parfois mentionnés comme les catalyseurs à base de zinc, de zirconium ou d'aluminium, mais ils n'ont connus qu'un faible développement industriel en raison de leur médiocre efficacité.

Pour un développement durable, il apparaît donc nécessaire de développer des catalyseurs non toxiques pour la réaction de polycondensation des organopolysiloxanes.

Un autre aspect important pour un catalyseur de la réaction de polycondensation des organopolysiloxanes est le temps de mise en oeuvre (« pot-life » ou « temps de travail »), c'est-à-dire le temps pendant lequel la composition peut être utilisée après mélange sans durcir. Ce temps doit être suffisamment long, pour permettre son utilisation mais suffisamment court pour obtenir un objet moulé manipulable au plus tard quelques minutes ou quelques heures après sa fabrication. Le catalyseur doit donc permettre d'obtenir un bon compromis entre le temps d'utilisation du mélange catalysé et le temps au bout duquel l'objet moulé est manipulable (ces temps dépendent de l'application visée comme par exemple le moulage ou la fabrication de joints). En outre le catalyseur doit conférer au mélange catalysé un temps d'étalement qui ne varie pas en fonction de la durée au stockage.

L'objectif essentiel de la présente invention est donc de trouver un système catalytique utilisable à la fois dans la réticulation des compositions élastomères mono- et bi-composantes.

Un autre objectif essentiel de la présente invention est de proposer un système catalytique qui continue à répondre à la fois aux contraintes de conservation, de mise en oeuvre et de réticulation des deux types de compositions élastomères mono- et bi-composantes.

Il a maintenant été trouvé, et c'est ce qui constitue l'objet de la présente invention une composition organopolysiloxanique, caractérisée en ce qu'elle comprend d'une part une base silicone **B** apte à durcir par réaction de polycondensation en un élastomère silicone et d'autre part, une quantité catalytiquement efficace d'au moins un système catalytique **X** caractérisée en ce que
a) le système catalytique **X** comprend au moins un complexe ou sel métallique **A** de formule **(1)** suivante:

   [Zn (L¹)ᵣ₁ (L²)ᵣ₂ (Y)ₓ] **(1)**

   dans laquelle:
   - r1 = 1 ou 2, r2=0 ou 1 et x = 0 ou 1;
   - le symbole L¹ représente un ligand qui est un anion β-dicarbonylato ou l'anion énolate d'un composé β-dicarbonylé et lorsque r1 = 2, les symboles L¹ sont identiques ou différents,
   - le symbole L² représente un ligand anionique qui est différent de L¹ et
   - le symbole **Y** représente un ligand neutre, et
b) le système catalytique **X** est préparé selon le procédé suivant:
   - étape 1) le complexe ou sel métallique **A** est dispersé dans au moins un polymère huileux organopolysiloxanique **K** dont la viscosité est d'au moins 100 mPa.s de préférence d'au moins 5000 mPa.s et encore plus préférentiellement d'au moins 10 000 mPa.s, et
   - étape 2: le mélange est broyé éventuellement après un malaxage jusqu'à obtenir un mélange homogène qui est le système catalytique **X.**

Il est entendu que par "complexe ou sel métallique **A**", cette définition inclut toute forme oligomérique ou analogue dudit complexe ou sel métallique **A.**

Pour atteindre cet objectif, les inventeurs ont eu le mérite de mettre en évidence, de manière tout à fait surprenante et inattendue, que l'utilisation d'un système catalytique **X** qui est à base de zinc et est préparé suivant un procédé original permet d'utiliser un complexe ou sel métallique **A** de formule **(1)** décrite ci-dessus comme catalyseur de la réaction de polycondensation.

Il est aussi du mérite des inventeurs d'avoir vaincu le préjugé technique qui voulait que, jusqu'alors les complexes de zinc qui se présentent sous une forme solide n'ont qu'une médiocre activité dans la réaction de polycondensation d'organopolysiloxanes et de même que la mise en oeuvre d'un catalyseur sous forme solide et insoluble dans un milieu silicone ne présentait pas d'intérêt pour un homme du métier.

La composition selon l'invention permet d'obtenir des élastomères qui conservent après un traitement thermique de bonnes propriétés mécaniques, en particulier après un traitement thermique de 150°C ou 220°C pendant 3 jours. Ainsi même après ce traitement thermique la dureté Shore A de l'élastomère reste constante.

Il est à noter que la définition des ligands est tirée de l'ouvrage « Chimie Organométallique » de Didier Astruc, publié en 2000 par EDP Sciences, Cf. notamment Chapitre 1, « Les complexes monométalliques », pages 31 et suivantes.

La nature du ligand neutre Y importe peu et l'homme du métier utilisera tout type de ligand neutre adapté au métal concerné.

Pour détailler un peu plus la nature des éléments constitutifs de l'invention, il importe de préciser que tout appareil classique de malaxage peut être mis en oeuvre, notamment les appareils à agitation lente. Ainsi, l'opération de malaxage peut être réalisée dans un malaxeur muni d'un agitateur. A titre d'exemple, on peut citer les extrudeuses à vis simple ou multiple(s), les malaxeurs planétaires, les malaxeurs à crochet, les disperseurs lents, les malaxeurs statiques, les malaxeurs à pale, à hélice, à bras ou à ancre.

Tout polymère huileux organopolysiloxanique **K** dont la viscosité est d'au moins d'au moins 100 mPa.s de préférence d'au moins 5000 mPa.s et encore plus préférentiellement d'au moins 10 000 mPa.s convient à la mise en oeuvre de l'invention.

Selon un mode de réalisation particulièrement avantageux, le broyage est effectué au moyen d'un mélangeur à 3 cylindres dont les pressions de serrage entre les cylindres sont ajustées de façon à conduire à un mélange homogène.

Pour la réalisation de l'invention, on utilise de préférence un complexe ou sel métallique **A** de formule **(2)** suivante:

[Zn (L¹)ᵣ₁ (L²)ᵣ₂] **(2)**

dans laquelle:
- r1 = 1 ou 2 et r2 = 0 ou 1; avec r1+r2 = 2,
- le symbole L¹ représente un ligand qui est un anion β-dicarbonylato ou l'anion énolate d'un composé β-dicarbonylé et lorsque rl= 2, les symboles L¹ sont identiques ou différents, et
- le symbole L² représente un ligand anionique qui est différent de L¹.

Il est à noter qu'au moins une partie du caractère inventif de l'invention, tient à la sélection judicieuse et avantageuse des associations délimitées de composés métalliques **A** utilisées à titre de catalyseur de polycondensation.

Selon une disposition préférée de réalisation de l'invention, le complexe ou sel métallique **A** est choisi parmi le groupe constitué par les complexes de formules **(3)** à **(6)** suivantes:
**(3):** [Zn (*t-Bu-acac*)₂] avec avec (*t-Bu-acac*) = l'anion 2,2,6,6-tétraméthyl-3,5-heptanedionato ou l'anion énolate de la 2,2,6,6-tétraméthyl-3,5-heptanedione,
**(4):** [Zn (2,4-pentanedionato)₂],
**(5):** [Zn (3,5-heptanedionato)₂]; et
**(6):** [Zn (2,6-dimethyl-3,5 heptanedionato)₂]

Selon une autre disposition préférée de réalisation de l'invention, le ligand β-dicarbonylato L¹ est un anion β-dicétonato dérivé d'une β-dicétone ou un anion β-cétoestérato dérivé d'un β-cétoester de formule suivante:

R¹COCHR²COR³ **(7)**

dans laquelle :
- R¹ représente un radical hydrocarboné linéaire ou ramifié, substitué ou non, en C₁-C₃₀ ou un aromatique substitué ou non,
- R² est un hydrogène ou un radical hydrocarboné, en général alkyle, présentant avantageusement au plus 4 atomes de carbone ;
- R³ représente un radical hydrocarboné en C₁-C₃₀ linéaire, cyclique ou ramifié, substitué ou non, un aromatique substitué ou non, ou un radical -OR⁴ avec R⁴ qui représente un radical hydrocarboné en C₁-C₃₀ linéaire, cyclique ou ramifié, substitué ou non, avec
- R¹ et R² peuvent être reliés pour former un cycle, et
- R² et R⁴ peuvent être reliés pour former un cycle.

Parmi les β-dicétones de formule **(7)** particulièrement intéressantes pour la composition selon l'invention, on citera celles choisies parmi le groupe constitué par les β-dicétones: 2,4-pentanedione (*acac*); l'hexanedione-2,4; heptanedione-2,4; heptanedione-3,5; I'éthyl-3 pentanedione-2,4; méthyl-5 hexanedione-2,4; octanedione-2,4; octanedione-3,5; diméthyl-5,5 hexanedione-2,4; méthyl-6 heptanedione-2,4; diméthyl-2, 2 nonanedione-3,5; diméthyl-2,6 heptanedione-3,5; 2-acétylcyclohexanone (*Cy-acac*); 2,2,6,6-tétraméthyl-3,5-heptanedione (*t-Bu-acac*); 1,1,1,5,5,5-hexafluoro-2,4-pentanedione (*F-acac*); trifluoroacétylacétone; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; stéaroylbenzoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane.

Selon une autre disposition préférée de réalisation de l'invention, le ligand β-dicarbonylato L¹ est un anion β-cétoestérato choisi parmi le groupe constitué par les anions dérivés des composés suivants: les esters méthylique, éthylique, n-propylique, isopropylique, n-butylique, sec-butylique, isobutylique, tertiobutylique, isopentylique, n-hexylique, n-octylique, méthyl-1 heptylique, n-nonylique, n-décylique et n-dodécylique de l'acide acétylacétique ou ceux décrit dans la demande de brevet FR-A-1435882.

Pour détailler un peu plus la nature des éléments constitutifs du complexe métallique **A** selon l'invention, il importe de préciser que L² est un ligand anioniques qui peut être sélectionné dans le groupe constitué par les anions: fluoro (F), chloro (Cl⁻), triiodo(1⁻) (I₃)⁻, difluorochlorato(I⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tétraoxochlorato(1⁻) (CIO₄)⁻, hydroxo (OH)⁻, mercapto (SH)⁻, sélanuro (SeH)⁻, hyperoxo (O₂)⁻, ozonido (O₃)⁻, hydroxo (OH⁻), hydrodisulfuro (HS₂)⁻, méthoxo (CH₃O)⁻, éthoxo (C₂H₅O)⁻, propoxydo (C₃H₇O)⁻, méthylthio (CH₃S)⁻, éthanethiolato (C₂H₅S)⁻, 2-chloroéthanolato (C₂H₄CIO)⁻, phénoxydo (C₆H₅O)⁻, phénylthio (C₆H₅S)⁻, 4-nitrophénolato [C₆H₄(NO₂)O]⁻, formato (HCO₂)⁻, acétato (CH₃CO₂)⁻, propionato (CH₃CH₂CO₂)⁻, azoturo (N₃)⁻, cyano (CN)⁻, cyanato (NCO)⁻, thiocyanato (NCS)⁻, sélénocyanato (NCSe)⁻, amido (NH₂)⁻, phosphino (PH₂)⁻, chloroazanuro (CIHN)⁻, dichloroazanuro (Cl₂N)⁻, [méthanaminato(1⁻)] (CH₃NH)⁻, diazénuro (HN=N)⁻, diazanuro (H₂N-NH)⁻, diphosphénuro (HP=P)⁻, phosphonito (H₂PO)⁻, phosphinato (H₂PO₂)⁻, carboxylato, énolato, les amidures, alkylato et arylato.

Selon un mode de réalisation particulièrement préféré, L² est un ligand anionique sélectionné dans le groupe constitué par les anions: acétate, oxalate, propionate, butyrate, isobutyrate, diéthylacétate, benzoate, 2-éthylhexanoate, stéarate, méthoxyde, éthoxyde, isopropoxyde, tert-butoxyde, tert-pentoxyde, 8-hydroxyquinolinate, naphténate et tropolonate.

La nature du ligand neutre Y importe peu et l'homme du métier utilisera tout type de ligand neutre adapté au métal concerné.

L'invention concerne aussi un système catalytique **X** caractérisée en ce que
a) le système catalytique **X** comprend au moins un complexe ou sel métallique **A** de formule **(1)** suivante:

   [Zn (L¹)ᵣ₁(L²)ᵣ₂ (Y)ₓ] **(1)**

   dans laquelle:
   - r1≥ 1, et r2=0 ou 1 et x = 0 ou 1;
   - le symbole L¹ représente un ligand qui est un anion β-dicarbonylato ou l'anion énolate d'un composé β-dicarbonylé et lorsque r1 = 2, les symboles L¹ sont identiques ou différents,
   - le symbole L² représente un ligand anionique qui est différent de L¹, et
   - le symbole Y représente un ligand neutre, et
b) le système catalytique **X** est préparé selon le procédé suivant:
   - étape 1) le complexe ou sel métallique **A** est dispersé dans au moins un polymère huileux organopolysiloxanique **K** dont la viscosité est d'au moins 100 mPa.s de préférence d'au moins 5000 mPa.s et encore plus préférentiellement d'au moins 10 000 mPa.s, et
   - étape 2: le mélange est broyé éventuellement après un malaxage jusqu'à obtenir un mélange homogène qui est le système catalytique **X.**

Selon un autre mode préférentiel, l'invention concerne aussi un système catalytique **X** tel que décrit ci-dessus et caractérisée en ce que:
a) le système catalytique **X** comprend au moins un complexe ou sel métallique **A** de formule **(2)** suivante:

   [Zn (L¹)ᵣ₁ (L²)ᵣ₂] **(2)**

   dans laquelle:
   - r1 = 1 ou 2 et r2 = 0 ou 1; avec r1+r2 = 2,
   - le symbole L¹ représente un ligand qui est un anion β-dicarbonylato ou l'anion énolate d'un composé β-dicarbonylé et lorsque r1 = 2, les symboles L¹ sont identiques ou différents, et
   - le symbole L² représente un ligand anionique qui est différent de L¹.

La quantité du système catalytique **X** selon l'invention est ajustée par l'homme du métier de manière à ce que complexe ou sel métallique **A** soit en quantité suffisante pour répondre aux besoins de l'application. De manière générale le complexe ou sel métallique **A** sera présent dans la composition dans des quantités comprises entre 0,01 et 15 %, et de préférence entre 0,05 et 10 % en poids de la masse totale de la composition.

Un autre objet de l'invention consiste en l'utilisation d'un système catalytique **X** selon l'invention et tel que défini ci-dessus comme catalyseur de la réaction de polycondensation d'organopolysiloxanes.

### Description de la base silicone B :

Les bases silicone utilisées dans la présente invention réticulant et durcissant par des réactions de polycondensation sont bien connues. Ces bases sont décrites en détail en particulier dans de nombreux brevets et elles sont disponibles dans le commerce.

Ces bases silicones peuvent être mono-composantes, c'est-à-dire conditionnées en un seul emballage, et stables au stockage en l'absence d'humidité, durcissables en présence d'humidité, en particulier d'humidité apportée par l'air ambiant ou par de l'eau générée au sein de la base lors de son emploi.

En dehors des bases mono-composantes peuvent être utilisées des bases bi-composantes, c'est-à-dire conditionnées en deux emballages, qui durcissent dès l'incorporation du système catalytique **X** selon l'invention. Elles sont conditionnées après incorporation du catalyseur en deux fractions séparées, l'une des fractions pouvant ne renfermer par exemple que le catalyseur selon l'invention ou un mélange avec l'agent réticulant.

La base silicone **B** utilisée pour réaliser la composition selon invention peut comprendre:
- au moins une huile polyorganosiloxane **C** susceptible de réticuler par polycondensation en un élastomère;
- éventuellement au moins un agent de réticulation **D**;
- éventuellement au moins un promoteur d'adhérence E; et
- éventuellement au moins une charge minérale siliceuse, organique et/ou non siliceuse **F.**

L'huile polyorganosiloxane **C** est de préférence un polymère α,ω-dihydroxypolydiorganosiloxane, de viscosité comprise entre 50 et 5 000 000 mPa.s à 25°C et agent de réticulation **D** est de préférence un composé organosilicié portant plus de deux groupes hydrolysables liés aux atomes de silicium par molécule. L'huile polyorganosiloxane **C** peut également être fonctionnalisée au niveau de ses extrémités par des radicaux hydrolysables obtenu par condensation d'un précurseur porteur de fonctions hydroxyles avec un silane réticulant porteur de radicaux hydrolysables.

Comme agent de réticulation **(D)** on peut citer :
- les silanes de formule générale suivante :

   R¹ₖ Si(OR²)₍₄₋ₖ₎

   dans laquelle les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, le symbole R¹ représente un groupe hydrocarboné aliphatique saturé ou insaturé, linéaire ou ramifié, un groupe carbocyclique, saturé ou insaturé et/ou aromatique, monocyclique ou polycyclique et k est égal à 0, 1 ou 2 ; et
- les produits d'hydrolyse partielle de ce silane.

Comme exemple de radicaux alcoxyalkylène en C₃-C₆ on peut citer les radicaux suivants :

CH₃OCH₂CH₂-

CH₃OCH₂CH(CH₃)-

CH₃OCH(CH₃)CH₂-

C₂H₅OCH₂CH₂CH₂-

Le symbole R¹ représente un radical hydrocarboné en C₁-C₁₀ englobant:
- les radicaux alkyles en C₁-C₁₀ tels que les radicaux méthyle, éthyle, propyle, butyle, pentyle, éthyl-2 hexyle, octyle, décyle,
- les radicaux vinyle, allyle, et
- les radicaux cycloalkyles ce C₅-C₈ tels que les radicaux phényle, tolyle et xylyle.

Les agents de réticulation **D** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **D,** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **D** qui peuvent être utilisés, on cite plus particulièrement les silanes suivants :
- le propyltriméthoxysilane,
- le méthyltriméthoxysilane,
- l'éthyltriméthoxysilane,
- le vinyltriéthoxysilane,
- le méthyltriéthoxysilane,
- le vinyltriéthoxysilane,
- le propyltriéthoxysilane,
- le tétraéthoxysilane,
- le tétrapropoxysilane,
- le 1,2-bis(triméthoxysilyl)éthane,
- le 1,2-bis(triéthoxysilyl)éthane, et
- le tétraisopropoxysilane,
ou encore: CH₃Si(OCH₃) ₃ ; C₂H₅Si(OC₂H₅) ₃ ; C₂H₅Si(OCH₃) ₃
CH₂=CHSi(OCH₃)₃; CH₂=CHSi(OCH₂CH₂OCH₃) ₃
C₆H₅Si(OCH₃)₃ ; [CH₃][OCH(CH₃)CH₂OCH₃]Si[OCH₃] ₂
Si(OCH₃)₄ ; Si(OC₂H₅)₄; Si(OCH₂CH₂CH₃)₄; Si(OCH₂CH₂CH₂CH₃) ₄ Si(OC₂H₄OCH₃)₄ ; CH₃Si(OC₂H₄OCH₃) ₃ ; CICH₂Si(OC₂H₅) ₃ ;

Comme autres exemples d'agent de réticulation **D**, on peut citer le polysilicate d'éthyle, ou le polysilicate de n-propyle.

On utilise généralement de 0,01 à 60 parties en poids d'agent de réticulation **D** pour 100 parties en poids de polyorganosiloxane **C** susceptible de réticuler par polycondensation en un élastomère.

Ainsi la composition selon l'invention peut comprendre au moins un promoteur d'adhérence **E** tel que par exemple les composés organosiliciques portant à la fois :
(1) un ou des groupes hydrolysables liés à l'atome de silicium et
(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange:
   vinyltriméthoxysilane (VTMO),
   3-glycidoxypropyl-triméthoxysilane (GLYMO),
   méthacryloxypropyltriméthoxysilane (MEMO),
   [H₂N(CH₂)₃]Si(OCH₂CH₂CH₃)₃,
   [H₂N(CH₂)₃]Si(OCH₃)₃
   [H₂N(CH₂)₃]Si(OC₂H₅)₃
   [H₂N(CH₂)₄]Si(OCH₃)₃
   [H₂NCH₂CH(CH₃)CH₂CH₂]SiCH₃(OCH₃)₂
   [H₂NCH₂]Si(OCH₃)₃
   [n-C₄H₉-HN-CH₂]Si(OCH₃)₃
   [H₂N(CH₂)₂NH(CH₂)₃]Si(OCH3)₃
   [H₂N(CH₂)₂NH(CH₂)₃]Si(OCH2CH₂OCH₃)₃
   [CH₃NH(CH₂)₂NH(CH₂)₃]Si(OCH₃)₃
   [H(NHCH₂CH₂)₂NH(CH₂)₃]Si(OCH₃)₃ 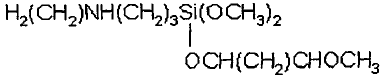 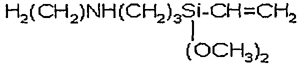
   ou des oligomères polyorganosiloxaniques contenant de tels groupes organiques à une teneur supérieure à 20%.

Pour les bases mono- et bi-composantes, on utilise comme charges minérales **F** des produits très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g.

L'introduction des charges a pour but de conférer de bonnes caractéristiques mécaniques et rhéologiques aux élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les coktails d'oxyde décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

D'autres agents auxiliaires et additifs usuels peuvent être incorporés à la composition selon l'invention; ceux-ci sont choisis en fonction des applications dans lesquelles sont utilisées lesdites compositions.

La base silicone utilisée pour réaliser la composition selon l'invention peut comprendre:
- 100 parties d'huile polyorganosiloxane **C** susceptible de réticuler par polycondensation en un élastomère ;
- 0 à 20 parties d'un agent de réticulation **D**;
- 0 à 20 parties d'un promoteur d'adhérence **E**; et
- 0 à 50 parties de charge **F.**

Outre les constituants principaux, des polymères polyorganosiloxanes linéaires non réactif **G** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **G** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties de d'huile polyorganosiloxane **C** susceptible de réticuler par polycondensation.

Les compositions selon l'invention peuvent en outre avantageusement comprendre au moins une résine silicone **H.** Ces résines silicones sont des polymères organopolysiloxanes ramifiés bien connus et disponibles dans le commerce. Elles présentent, par molécule, au moins deux motifs différents choisis parmi ceux de formule R"'₃SiO_{1/2} (motif M), R"'₂SiO_{2/2} (motif D), R"'SiO_{3/2} (motif T) et SiO_{4/2} (motif Q). Les radicaux R"' sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g.

Comme exemple de résines, on peut citer les résines MQ, les résines MDQ, les résines TD et les résines MDT.

Pour fabriquer les compositions conformes à l'invention, il est nécessaire dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités. Tous ces ingrédients peuvent être chargés dans l'appareillage selon un ordre quelconque d'introduction. Ainsi il est possible de mélanger tout d'abord les huiles organopolysiloxanes **C** et les charges **F** et d'ajouter ensuite à l'empâtage obtenu les réticulants **D**, les composés **E** et le catalyseur selon l'invention. Il est également possible de mélanger les huiles **C**, les réticulants **D**, les composés **E** et les charges **F** et d'ajouter ultérieurement le catalyseur selon l'invention. Au cours de ces opérations, les mélanges peuvent être chauffés à une température comprise dans l'intervalle 50-180°C sous la pression atmosphérique ou sous une pression réduite afin de favoriser le départ de matières volatiles.

Les compositions mono-composantes, conformes à l'invention, utilisées telles quelles, c'est-à-dire non diluées, ou sous forme de dispersions dans des diluants, sont stables au stockage en l'absence d'eau et durcissent dès les basses températures (après départ des solvants dans le cas des dispersions) en présence d'eau pour former des élastomères.

Après le dépôt des compositions telles quelles, sur des substrats solides, en atmosphère humide, on constate qu'un processus de durcissement en élastomères se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Les compositions mono-composantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

La fabrication des compositions bi-composantes conformes à l'invention s'effectue également par mélange des divers constituants dans des appareils appropriés. Pour obtenir des compositions homogènes, il est préférable de mélanger tout d'abord les polymères **A** avec les charges **C** ; l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants, le catalyseur et éventuellement des additifs et adjuvants divers et même de l'eau.

Les compositions conformes à l'invention peuvent être employées pour de multiples applications comme le jointoiement et/ou le collage dans l'industrie du bâtiment, l'industrie du transport (exemples : automobile, aérospatiale, ferroviaire, maritime et aéronautique), l'assemblage des matériaux les plus divers (métaux, matières plastiques, caoutchoucs naturels et synthétiques, bois, cartons, polycarbonate, faïence, brique, céramique, verre, pierre, béton et éléments de maçonnerie), l'isolation de conducteurs électriques, l'enrobage de circuits électroniques et la préparation de moules servant à la fabrication d'objets en résines ou mousses synthétiques.

Ainsi, un autre objet de invention consiste en un système bicomposant précurseur de la composition organopolysiloxanique selon l'invention et telle que définie et vulcanisable en élastomère silicone par des réactions de polycondensation et caractérisé en ce qu'il se présente en deux parties **P1** et **P2** distinctes destinées à être mélangées pour former ladite composition, et en ce que l'une de ces parties comprend:
- le système catalytique **X** selon l'invention et tel que défini ci-dessus comme catalyseur de la réaction de polycondensation d'organopolysiloxanes, et
- l'agent de réticulation **D** ou l'huile (ou les huiles) polyorganosiloxane(s) **C** susceptible(s) de réticuler par polycondensation en un élastomère,
alors que l'autre partie est exempte des espèces précitées.

Un autre objet de l'invention consiste aussi en une composition polyorganosiloxanique monocomposant stable au stockage en l'absence d'humidité et réticulant, en présence d'eau, en élastomère, caractérisée en ce qu'elle comprend:
- au moins un polyorganopolysiloxane linéaire réticulable présentant des extrémités fonctionnalisées de type alcoxy, oxime, acyle et /ou énoxy, de préférence alcoxy,
- une charge, et
- le système catalytique **X** selon l'invention et tel que défini ci-dessus.

Une composition organopolysiloxanique selon l'invention particulièrement avantageuse, et vulcanisable en élastomère silicone par des réactions de polycondensation comprend :
(a) une base silicone **B** comprenant :
   - pour 100 parties en poids d'au moins une huile polyorganosiloxane **C** susceptible de réticuler par polycondensation qui est un polymère réactif α,ω-dihydroxydiorganopolysiloxane dont les radicaux organiques sont des radicaux hydrocarbonés de préférence choisi parmi le groupe constitué par: les alkyles ayant de 1 à 20 atomes de carbone ; les cycloalkyles ayant de 3 à 8 atomes de carbone ; les alcényles ayant de 2 à 8 atomes de carbone et les cycloalcényles ayant de 5 à 8 atomes de carbone ;
   - de 0,1 à 60 parties en poids d'au moins un agent de réticulation **D** choisi parmi le groupe constitué par: les polyacoxysilanes, les produits provenant de l'hydrolyse partielle d'un polyalcoxysilane et les polyalcoxysiloxanes;
   - de 0 à 60 parties en poids d'un promoteur d'adhérence **E** tel que décrit ci-dessus;
   - de 0 à 250 parties en poids, de préférence de 5 à 200 parties en poids, d'au moins une charge minérale siliceuse, organique et/ou non siliceuse **F;**
   - de 0,001 à 10 parties en poids d'eau,
   - de 0 à 100 parties en poids d'au moins un polymère polyorganosiloxane linéaire non réactif **G** consistant dans un homopolymère ou copolymère linéaire dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes,
   - de 0 à 70 parties en poids de résines polyorganosiloxanes **H**,
   - de 0 à 20 parties en poids d'une base colorante ou d'un agent de coloration **I**, et
   - de 0 à 20 parties d'additifs auxiliaires **J** connus de l'homme de métier, tels que des agents plastifiant ; des ralentisseurs de réticulation, des huiles minérales, des agents antimicrobien, des additifs de tenue thermique tels que les oxydes de titane, de fer ou de cérium, et
(b) de 0,1 à 50 parties en poids du système catalytique **X** selon l'invention et tel que défini ci-dessus.

Les compositions bi-composantes selon l'invention peuvent être mises en forme, extrudées ou en particulier moulées suivant des formes variées, puis être durcies à la température ambiante en un élastomère.

En outre, elles conviennent pour la formation de joints "in-situ" utilisés dans l'industrie automobile. Ces joints "in-situ" englobent plusieurs types, à savoir les joints "écrasés" (dits « flués »), les joints "en forme" (dits « profilés sur pièce ») et les joints "injectés".

Les joints "écrasés" sont formés à la suite de l'application d'un cordon pâteux des compositions sur la zone de contact entre 2 éléments métalliques ou plastiques à assembler. Le cordon pâteux est d'abord déposé sur l'un des éléments puis l'autre élément est aussitôt appliqué sur le premier; il en résulte un écrasement du cordon avant qu'il ne se transforme en élastomère. Ce type de joints s'adresse à des assemblages ne devant pas être couramment démontés (joints de carter d'huile, joints de carter de distribution...).

Les joints "en forme" sont également obtenus à la suite de l'application d'un cordon pâteux des compositions sur la zone de contact entre 2 éléments à assembler. Toutefois, après la dépose du cordon pâteux sur l'un des éléments on attend le durcissement complet du cordon en élastomère et à ce moment-là seulement applique le deuxième élément sur le premier.

Par ailleurs les joints, par leurs caractères caoutchouteux ou fluides, épousent toutes les irrégularités des surfaces à jointoyer de ce fait, il est inutile :
(1) d'usiner soigneusement les surfaces métalliques devant être mises en contact les unes avec les autres, et
(2) de serrer avec force les assemblages obtenus; ces particularités permettent de supprimer dans une certaine mesure, des joints de fixation, des entretoises, des nervures destinés habituellement à raidir et renforcer les éléments des assemblages.

Comme les compositions conformes à l'invention durcissent rapidement à température ambiante et même en milieu confiné, il en résulte que les joints "en forme" (et aussi les autres joints "in-situ") découlant du durcissement de ces compositions sont auto-adhérents et peuvent être aisément fabriqués dans des conditions industrielles. Ils peuvent, par exemple, être fabriqués sur les chaînes de montage usuelles de l'industrie automobile munies d'un appareil automatique de dépose des compositions. Cet appareil automatique possède bien souvent une tête mélangeuse et d'une buse de dépose, celle-ci se déplaçant selon le profil des joints à fabriquer.

Les compositions, fabriquées et distribuées au moyen de cet appareil doivent avoir une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boites à vitesses, d'entretoises de distribution et même de carters d'huile.

Les joints injectés sont formés en milieu confiné, dans des cavités souvent complètement closes; les compositions placées dans ces cavités se transforment rapidement en élastomères. Ces joints peuvent assurer par exemple l'étanchéité des paliers de vilbrequins.

Les compositions conformes à l'invention conviennent également pour la formation de joints et/ou colles à durcissement rapide et auto-adhérent dans d'autres domaines que l'automobile. Ainsi elles peuvent servir à coller et à jointoyer des armoires électriques en matière plastique, à produire des joints et/ou colles :
- pour des appareils électroménagers notamment pour assembler des pièces telles les parois vitrées et métalliques des fours, des pièces d'aspirateur et de fer à repasser,
- pour des boîtiers électroniques utilisés par exemple dans l'automobile (exemples répartiteur de frein....), et
- pour l'assemblage, le collage, jointement de réservoir par exemple dans l'industrie automobile.

Les compositions conformes à l'invention conviennent tout particulièrement pour la formation de joints en milieu confiné et susceptible de subir un traitement thermique de part le type d'application, par exemple pour des joints utilisés pour coller des éléments dans des appareils électroménagers tels que des fours à cuisson. En effet, dans certaines applications, le joint doit supporter des températures supérieures ou égales à 100°C tout en maintenant une adhésion conforme aux besoins de l'application.

Un autre objet de l'invention concerne un joint autoadhérent et/ou une colle préparés par durcissement à température ambiante :
- d'une composition organopolysiloxanique selon l'invention, ou
- d'une composition organopolysiloxanique issue du mélange des parties **P1** et **P2** du bi-composant tel que défini ci-dessus.

Le dernier objet selon l'invention consiste en un élastomère ayant une bonne tenue thermique et obtenu par réticulation et durcissement du système bi-composant selon l'invention et tel que décrit ci-dessus, ou de la composition selon l'invention et telle que décrite ci-dessus.

D'autres avantages et caractéristiques de la présente invention apparaîtront à la lecture des exemples suivants donnés à titre illustratif nullement limitatif.

### EXEMPLES:

### EXEMPLES 1 à 4 :

### 1) Préparation du système catalytique selon l'invention

Le complexe [Zn *(t-Bu-acac)₂]* est dispersé à 6.1% ou à 10% dans deux huiles silicones de viscosités différentes :
- a1 : huile polydiméthylsiloxane hydroxylée bloquée à chacune des extrémités de chaînes par un motif (CH₃)₂(OH)SiO_{0,5} ayant une viscosité de **14000 mPa.s** à 25°C.
- a4 : huile polydiméthylsiloxane bloquée à chacune des extrémités de chaînes par un motif (CH₃)₃SiO_{0,5} ayant une viscosité de **50 mPa.s** à 25°C.

Les mélanges sont ensuite finement broyés au moyen d'un mélangeur à 3 cylindres, dont les pressions de serrage entre les cylindres sont ajustées de façon à conduire, si possible, à des mélanges homogènes. Les systèmes catalytiques ainsi obtenus sont caractérisés du point de vue de l'aspect et par une mesure de viscosité sur un appareil Brookfield :

**Tableau 1**

| | | Système catalytique d1 | Système catalytique d2 | Comparatif d3 |
|---|---|---|---|---|
| Dilution dans une huile silicones % en poids | | 6.09% dans a1 | 10% dans a1 | 6.09% dans a4 |

| Aspect | | Homogène | Homogène | Suspension hétérogène qui décante |
|---|---|---|---|---|
| Viscosité Brookfield | V=0.5 | 80000 | 200000 | / |
| (Cps) | V = 1 | 72000 | 160000 | / |
| - 23°C, Aiguille N°7 | | | | |
| - Vitesse variable : V | v = 2.5 | 70000 | 120000 | / |

Les résultats du tableau 1 démontrent l'importance d'utiliser une huile silicone ayant une viscosité d'au moins 100 mPa.s est importante pour obtenir des mélanges homogènes afin de pouvoir mettre en oeuvre le système catalytique selon l'invention.

### 2) Composition silicone réticulant à température ambiante par réaction de polycondensation

On prépare les compositions bi-composantes détaillées dans les tableaux 2 et 3. Les ingrédients listés ci-après sont les constituants utilisés pour les Exemples 1 à 4 et les Comparatifs 1 à 3 :
- a1 : huile polydiméthylsiloxane hydroxylée bloquée à chacune des extrémités de chaînes par un motif (CH₃)₂(OH)SiO_{0,5} ayant une viscosité de 14000 mPa.s à 25°C,
- a2 : huile polydiméthylsiloxane hydroxylée bloquée à chacune des extrémités de chaînes par un motif (CH₃)₂(OH)SiO_{0,5} ayant une viscosité de 3500 mPa.s à 25°C,
- a3 : huile polydiméthylsiloxane hydroxylée bloquée à chacune des extrémités de chaînes par un motif (CH₃)₂(OH)SiO_{0,5} ayant une viscosité de 750 mPa.s à 25°C,
- a4 : huile polydiméthylsiloxane hydroxylée bloquée à chacune des extrémités de chaînes par un motif (CH₃)₂(OH)Si0_{0,5} ayant une viscosité de 50 mPa.s à 25°C.
- b1 : silice de pyrogénation ayant une surface spécifique BET de 200 m²/g,
- b2 : quartz broyé présentant un diamètre moyen de particules de 10 µm,
- b3 : silice de pyrogénation ayant une surface spécifique BET de 200 m²/g, traitée par de l'HMDZ, dispersée dans un mélange de a1 et d'une huile polydiméthylsiloxane bloquée à chacune des extrémités de chaînes par un motif (CH₃)₃SiO_{0,5},
- c : eau,
- d1 : **Système catalytique X selon l'invention :** [Zn (*t-Bu-acac*)₂] dispersé à 6% dans a1 et préparé selon le mode opératoire décrit dans le paragraphe 1) ci-dessus.
- d2 : **Système catalytique X selon l'invention** : [Zn (*t-Bu-acac*)₂] dispersé à 10% dans a1 et préparé selon le mode opératoire décrit dans le paragraphe 1) ci-dessus.
- d4 : [Zn (*t-Bu-acac*)₂] dilué à 37.4% dans un solvant organique (acétate d'éthyle),
- d5 : Fomrez® catalyst UL-28 : dimethylbis[(1-oxoneodecyl)oxy]stannane = [C₉H₁₉COO]₂Sn(Me)₂
- d6 : composés stanno-silicique qui est le produit de réaction de Si(OC₂H₅)₄ et du diacétate de dibutylétain (DADBE) de formule : [CH₃ (CH₂)₃] ₂Sn[OCOCH₃] ₂ (température de réaction = 130°C)
- e : polysilicate d'éthyle;
- f : composé organoaminosilane de formule: H₂N(CH₂)₂NH(CH₂)₃Si(OCH₃)₃

**Tableau 2 : Compositions RTV2 non auto-adhérentes (parties en poids)**

| Ingrédients | Exemple 1 | Comparatif 1 | Exemple 2 | Comparatif 2 | Exemple 3 |
|---|---|---|---|---|---|
| a1 | 2.36 | 4.75 | 2.11 | 20 | 9.56 |
| a3 | | | 1 | 1 | |
| b2 | | | 18 | 18 | 18 |
| b3 | | | 60.2 | 60.2 | 60.2 |
| c | | | 0.1 | 0.1 | 0.0 |
| d1 (Invention) | 2.53 (1eq Zn) | | 19.04 | | |
| d2 (Invention) | | | | | 11.6 |
| d4 (Comparatif) | | 0.532 (1.2eq Zn) | | | |
| d5 (Comparatif) | | | | 0.44 | |
| e | 0.28 | 0.24 | 3.0 | 1.5 | 3.0 |

**Tableau 3 : Compositions RTV2 auto-adhérentes (parties en poids)**

| Ingrédients | Exemple 4 | Comparatif 3 |
|---|---|---|
| a2 | 50.98 | 50.98 |
| a4 | 0 | 1.5 |
| b1 | 6.63 | 6.63 |
| b2 | 42.32 | 42.32 |
| c | 0.075 | 0.075 |
| d1 (invention) | 7.15 | |
| d6 (comparatif) | | 0.471 |
| e | 10 | 0.67 |
| f | 1.71 | 1.71 |

### 4) Tests sur les compositions non auto-adhérentes:

Les résultats du Tableau 4, en particulier l'exemple 1 et le Comparatif 1, mettent en évidence l'efficacité du procédé de préparation du système catalytique revendiqué. De plus, les exemples 2 et 3 démontrent l'intérêt d'utiliser ce système catalytique pour obtenir des élastomères ne contenant pas de produits toxiques et ayant un temps de travail adapté à l'application (c'est-à-dire un pot-life suffisamment long pour permettre son utilisation mais suffisamment court pour obtenir un objet manipulable au plus tard après 24h à 23°C).

**Tableau 4 - Cinétique de réticulation (Pot-life et Cinétique d'acquisition de Dureté Shore A)**

| | Exemple 1 | Comparatif 1 | Exemple 2 | Exemple 3 |
|---|---|---|---|---|
| Temps de travail (min.) | 9min | 30min | 60min | 7min |
| DSA après 24h à 23°C (dessus/dessous) | 21/10 | 19/11 | 9/16 | 16/16 |
| DSA après 4j à 23°C (dessous) | 23 | 22 | 21 | 22 |
| du pion réticulé | Homogène | Hétérogène | Homogène | Homogène |

| | | | | |
|---|---|---|---|---|
| - Dureté Shore A, notée DSA : mesures effectuées selon les indications de la norme ASTM-D2240), | | | | |

Les résultats du Tableau 5 montrent que l'élastomère obtenu présente de bonnes propriétés mécaniques, similaires à celles obtenues avec un catalyseur à base d'étain.

**Tableau 5 - Propriétés mécaniques**

| Propriétés mécaniques | DSA 4j (dessous) | Rd (N/mm) | RR (Mpa) | AR (%) |
|---|---|---|---|---|
| Exemple 3 | 22 | 21 | 3,1 | 370 |
| Comparatif 2 | 22 | 20 | 3.5 | 400 |

| | | | | |
|---|---|---|---|---|
| - A/R = allongement à la rupture (%, mesures effectuées selon les indications de la norme ASTM-D412 ou AFNOR-T-46002). - R/R = résistance à la rupture (MPa, mesures effectuées selon les indications de la norme ASTM-D412 ou AFNOR-T-46002). | | | | |

**Le Tableau 6 : Propriétés après traitement thermique à 150°C et 220°C.**

| Durée du traitement thermique (h) | Comparatif 2 DSA à 150°C | Comparatif 2 DSA à 220°C | Exemple 3 DSA à 150°C | Exemple 3 DSA à 220°C |
|---|---|---|---|---|
| 0 | 23 | 23 | 23 | 23 |
| 7 | 18 | 18 | 24 | 22 |
| 14 | 14 | 23 | | |
| 21 | 16 | 25 | | |
| 45 | 16 | 28 | | |
| 47 | | | 23 | 22 |
| 69 | 16 | 28 | | |
| 71 | | | 23 | 21 |

Le Tableau 6 met également en évidence la très bonne tenue thermique des élastomères réticulés en présence du système catalytique revendiqué : en effet, la Dureté Shore A (DSA) de ces élastomères reste constante après un traitement thermique à 150°C et 220°C, contrairement aux élastomères catalysés par des complexes de l'étain (perte de DSA à 150°C ou diminution suivie d'une forte augmentation à 220°C) qui présentent une forte variation de la DSA. En effet, le comparatif 2 à 150°C montre un élastomère dont où la DSA passe de 23 à 14 après un traitement thermique de 14h et durci pour atteindre une DSA de 16 après 45h. Le même comparatif 2 mais à 220°C montre un élastomère qui cette fois voit sa dureté DSA passer de 23 à 28 après un traitement thermique de 45h. Il est clair que ces variations de dureté sont néfaste pour toute application nécessitant une bonne tenue thermique mais aussi un comportement stable de l'élastomère subissant ce type de contrainte.

### 5) Tests sur les compositions auto-adhérentes:

Les résultats des Tableaux 7 et 8 démontrent l'efficacité du système catalytique pour obtenir un RTV ayant une vitesse de prise rapide et une bonne adhésion sur des supports variés. Les propriétés d'adhérence des compositions ont mesurées en réalisant des collages mixtes (norme MNRPS-748, joint de 1 mm d'épaisseur) entre Verre/Inox.

Les résultats de cinétiques et d'adhérence sont présentés dans les Tableaux 7 et 8.

**Tableau 7**

| | Exemple 4 | Comparatif 3 |
|---|---|---|
| Temps de travail (min.) | 5min | 3min |
| DSA après 60min à 23°C | 16 | 15 |
| DSA après 24h à 23°C | 43 | / |
| DSA après 6-7j à 23°C | 54 | 52 |

**Tableau 8**

| Test d'adhésion Après 7 jours à 23°C | Exemple 5 |
|---|---|
| Contrainte à la rupture (MPa) | 1.6 |
| Type de rupture (% de cohésion) | 75 |

| | |
|---|---|
| - Contrainte à la rupture : mesures effectuées selon les indications de la Norme MNRPS-748), - Cohésion : mesures effectuées selon les indications de la Norme MNRPS-748). | |

L'ensemble de ces résultats montre que le système catalytique selon l'invention conduit à l'obtention d'élastomères ayant des propriétés équivalentes ou supérieures au témoin, en particulier au niveau des propriétés de tenue thermique (pas d'évolution de DSA après un traitement thermique à 220°C de longue durée), accompagnée d'une cinétique très rapide compatible avec les cadences industrielles. Ce système catalytique est également compatible avec les promoteurs d'adhérence contenus dans certains RTV auto-adhérents.

## Revendications

1. Composition organopolysiloxanique, **caractérisée en ce qu'**elle comprend d'une part une base silicone **B** apte à durcir par réaction de polycondensation en un élastomère silicone et d'autre part, une quantité catalytiquement efficace d'au moins un système catalytique **X caractérisée en ce que**
a) le système catalytique **X** comprend au moins un complexe ou sel métallique **A** de formule **(1)** suivante:
[Zn (L¹)ᵣ₁ (L²)ᵣ₂ (Y)ₓ] **(1)**
dans laquelle:
- r1 = 1 ou 2, r2=0 ou 1 et x = 0 ou 1;
- le symbole L¹ représente un ligand qui est un anion β-dicarbonylato ou l'anion énolate d'un composé β-dicarbonylé et lorsque r1 = 2, les symboles L¹ sont identiques ou différents,
- le symbole L² représente un ligand anionique qui est différent de L¹ et
- le symbole Y représente un ligand neutre, et
b) le système catalytique **X** est préparé selon le procédé suivant:
- étape 1) le complexe ou sel métallique **A** est dispersé dans au moins un polymère huileux organopolysiloxanique **K** dont la viscosité est d'au moins 100 mPa.s de préférence d'au moins 5000 mPa.s et encore plus préférentiellement d'au moins 10 000 mPa.s, et
- étape 2: le mélange est broyé éventuellement après un malaxage jusqu'à obtenir un mélange homogène qui est le système catalytique **X.**

2. Composition organopolysiloxanique selon la revendication 1, **caractérisée en ce que** le broyage est effectué au moyen d'un mélangeur à 3 cylindres dont les pressions de serrage entre les cylindres sont ajustées de façon à conduire à un mélange homogène.

3. Composition organopolysiloxanique selon la revendication 1 ou 2, **caractérisée en ce que** le système catalytique **X** comprend au moins un complexe ou sel métallique **A** de formule **(2)** suivante:
[Zn (L¹)ᵣ₁ (L²)ᵣ₂] **(2)**
dans laquelle:
- r1 = 1 ou 2 et r2 = 0 ou 1; avec r1+r2 = 2,
- le symbole L¹ représente un ligand qui est un anion β-dicarbonylato ou l'anion énolate d'un composé β-dicarbonylé et lorsque r1= 2, les symboles L¹ sont identiques ou différents, et
- le symbole L² représente un ligand anionique qui est différent de L¹.

4. Composition organopolysiloxanique selon la revendication 3, **caractérisée en ce qu'**elle comprend d'une part une base silicone **B** apte à durcir par réaction de polycondensation en un élastomère silicone et d'autre part, une quantité catalytiquement efficace d'au moins un catalyseur de polycondensation qui est un complexe ou sel métallique **A** choisi parmi le groupe constitué par les complexes de formules **(3)** à **(6)** suivantes:
(3): [Zn (*t-Bu-acac*)₂] avec *(t-Bu-acac)* = l'anion 2,2,6,6-tétraméthyl-3,5-heptanedionato ou l'anion énolate de la 2,2,6,6-tétraméthyl-3,5-heptanedione,
(4): [Zn (2,4-pentanedionato)₂];
(5): [Zn (3,5-heptanedionato)₂]; et
(6): [Zn (2,6-dimethyl-3,5 heptanedionato) ₂].

5. Composition organopolysiloxanique selon l'une quelconque des revendications 1 à 3 **caractérisée en ce que** le ligand β-dicarbonylato L¹ est un anion β-dicétonato dérivé d'une β-dicétone ou un anion β-cétoestérato dérivé d'un β-cétoester de formule suivante:
R¹COCHR²COR³ **(7)**
dans laquelle :
- R¹ représente un radical hydrocarboné linéaire ou ramifié, substitué ou non, en C₁-C₃₀ ou un aromatique substitué ou non,
- R² est un hydrogène ou un radical hydrocarboné, en général alkyle, présentant avantageusement au plus 4 atomes de carbone ;
- R³ représente un radical hydrocarboné en C₁-C₃₀ linéaire, cyclique ou ramifié, substitué ou non, un aromatique substitué ou non, ou un radical -OR⁴ avec R⁴ qui représente un radical hydrocarboné en C₁-C₃₀ linéaire, cyclique ou ramifié, substitué ou non, avec
- R¹ et R² peuvent être reliés pour former un cycle, et
- R² et R⁴ peuvent être reliés pour former un cycle.

6. Composition organopolysiloxanique selon la revendication 5 **caractérisé en ce que** la β-dicétone de formule **(7)** est choisie parmi le groupe constitué par les β-dicétone: 2,4-pentanedione *(acac);* l'hexanedione-2,4; heptanedione-2,4; heptanedione-3,5; l'éthyl-3 pentanedione-2,4; méthyl-5 hexanedione-2,4; octanedione-2,4; octanedione-3,5; diméthyl-5,5 hexanedione-2,4; méthyl-6 heptanedione-2,4; diméthyl-2, 2 nonanedione-3,5; diméthyl-2,6 heptanedione-3,5; 2-acétylcyclohexanone *(Cy-acac);* 2,2,6,6-tétraméthyl-3,5-heptanedione *(t-Bu-acac);* 1,1,1,5,5,5-hexafluoro-2,4-pentanedione *(F-acac)];* benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; stéaroylbenzoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane.

7. Composition organopolysiloxanique selon l'une quelconque des revendications 1 à 3 **caractérisée en ce que** L² est un ligand anionique sélectionné dans le groupe constitué par les anions: fluoro (F⁻), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tétraoxochlorato(1⁻) (CIO₄)⁻, hydroxo (OH)⁻, mercapto (SH)⁻, sélanuro (SeH)⁻, hyperoxo (O₂)⁻, ozonido (O₃)⁻, hydroxo (OH⁻), hydrodisulfuro (HS₂)⁻, méthoxo (CH₃O)⁻, éthoxo (C₂H₅O)⁻, propoxydo (C₃H₇O)⁻, méthylthio (CH₃S)⁻, éthanethiolato (C₂H₅S)⁻, 2-chloroéthanolato (C₁H₄CIO)⁻, phénoxydo (C₆H₅O)⁻, phénylthio (C₆H₅S)⁻, 4-nitrophénolato [C₆H₄(NO₂)O]⁻, formato (HCO₂)⁻, acétato (CH₃CO₂)⁻, propionato (CH₃CH₂CO₂)⁻, azoturo (N₃)⁻, cyano (CN)⁻, cyanato (NCO)⁻, thiocyanato (NCS)⁻, sélénocyanato (NCSe)⁻, amido (NH₂)⁻, phosphino (PH₂)⁻, chloroazanuro (ClHN)⁻, dichloroazanuro (Cl₂N)⁻, [méthanaminato(1⁻)] (CH₃NH)⁻, diazénuro (HN=N⁻), diazanuro (H₂N-NH)⁻, diphosphénuro (HP=P)⁻, phosphonito (H₂PO)⁻, phosphinato (H₂PO₂)⁻, carboxylato, énolato, les amidures, alkylato et arylato.

8. Composition organopolysiloxanique selon l'une quelconque des revendications 1 à 3 **caractérisée en ce que** L² est un ligand anionique sélectionné dans le groupe constitué par les anions: acétate, oxalate, propionate, butyrate, isobutyrate, diéthylacétate, benzoate, 2-éthylhexanoate, stéarate, méthoxyde, éthoxyde, isopropoxyde, tert-butoxyde, tert-pentoxyde, 8-hydroxyquinolinate, naphténate et tropolonate.

9. Composition organopolysiloxanique selon l'une quelconque des revendications précédentes, **caractérisée en ce qu'**elle comprend outre une quantité catalytiquement efficace d'au moins un système catalytique **X** et tel que décrit selon l'une quelconque des revendications précédentes et une base silicone **B** comprenant:
- au moins une huile polyorganosiloxane **C** susceptible de réticuler par polycondensation en un élastomère;
- éventuellement au moins un agent de réticulation **D;**
- éventuellement au moins un promoteur d'adhérence **E;** et
- éventuellement au moins une charge minérale siliceuse, organique et/ou non siliceuse **F.**

10. Système bicomposant précurseur de la composition organopolysiloxanique telle que définie selon la revendication 9 et vulcanisable en élastomère silicone par des réactions de polycondensation et **caractérisé en ce qu'**il se présente en deux parties **P1** et **P2** distinctes destinées à être mélangées pour former ladite composition, et **en ce que** l'une de ces parties comprend:
- le système catalytique **X** tel que défini selon l'une quelconque des revendications 1 à 8 comme catalyseur de la réaction de polycondensation d'organopolysiloxanes, et
- l'agent de réticulation **D** ou l'huile (ou les huiles) polyorganosiloxane(s) **C** susceptible(s) de réticuler par polycondensation en un élastomère,
alors que l'autre partie est exempte des espèces précitées.

11. Composition polyorganosiloxanique monocomposant stable au stockage en l'absence d'humidité et réticulant, en présence d'eau, en élastomère, **caractérisée en ce qu'**elle comprend:
- au moins un polyorganopolysiloxane linéaire réticulable présentant des extrémités fonctionnalisées de type alcoxy, oxime, acyle et /ou énoxy, de préférence alcoxy,
- une charge, et
- le système catalytique **X** tel que défini selon l'une quelconque des revendications 1 à 8.

12. Composition organopolysiloxanique selon la revendication 9 vulcanisable en élastomère silicone par des réactions de polycondensation dans laquelle :
(a) la base silicone **B** comprend :
- pour 100 parties en poids d'au moins une huile polyorganosiloxane **C** susceptible de réticuler par polycondensation qui est un polymère réactif α,ω-dihydroxydiorganopolysiloxane dont les radicaux organiques sont des radicaux hydrocarbonés de préférence choisi parmi le groupe constitué par: les alkyles ayant de 1 à 20 atomes de carbone ; les cycloalkyles ayant de 3 à 8 atomes de carbone ; les alcényles ayant de 2 à 8 atomes de carbone et les cycloalcényles ayant de 5 à 8 atomes de carbone ;
- de 0,1 à 60 parties en poids d'au moins un agent de réticulation **D** choisi parmi le groupe constitué par: les polyacoxysilanes, les produits provenant de l'hydrolyse partielle d'un polyalcoxysilane et les polyalcoxysiloxanes;
- de 0 à 60 parties en poids d'un promoteur d'adhérence **E;**
- de 0 à 250 parties en poids, de préférence de 5 à 200 parties en poids, d'au moins minérale siliceuse, organique et/ou non siliceuse **F;**
- de 0,001 à 10 parties en poids d'eau,
- de 0 à 100 parties en poids d'au moins un polymère polyorganosiloxane linéaire non réactif **G** consistant dans un homopolymère ou copolymère linéaire dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes,
- de 0 à 20 parties en poids d'une base colorante ou d'un agent de coloration **H,**
- de 0 à 70 parties en poids de résines polyorganosiloxanes **I,** et
- de 0 à 20 parties d'additifs auxiliaires **J** connus de l'homme de métier, tels que des agents plastifiant ; des ralentisseurs de réticulation, des huiles minérales, des agents antimicrobien, des additifs de tenue thermique tels que les oxydes de titane, de fer ou de cérium, et
(b) de 0,1 à 50 parties en poids du système catalytique **X** tel que défini selon l'une quelconque des revendications 1 à 8.

13. Elastomère ayant une bonne tenue thermique et obtenu par réticulation et durcissement du système bicomposant selon la revendication 10 ou de la composition telle que définie selon l'une quelconque des revendications 1 à 9 ou 11 à 12.

14. Système catalytique **X caractérisé en ce que**
a) le système catalytique **X** comprend au moins un complexe ou sel métallique **A** de formule **(1)** suivante:
[Zn (L¹)ᵣ₁(L²)ᵣ₂ (Y)ₓ] (1)
dans laquelle:
- r1 ≥ 1, et r2=0 ou 1 et x = 0 ou 1;
- le symbole L¹ représente un ligand qui est un anion β-dicarbonylato ou l'anion énolate d'un composé β-dicarbonylé et lorsque r1 = 2, les symboles L¹ sont identiques ou différents,
- le symbole L² représente un ligand anionique qui est différent de L¹, et
- le symbole Y représente un ligand neutre, et
b) le système catalytique **X** est préparé selon le procédé suivant:
- étape 1) le complexe ou sel métallique **A** est dispersé dans au moins un polymère huileux organopolysiloxanique **K** dont la viscosité est d'au moins 100 mPa.s de préférence d'au moins 5000 mPa.s et encore plus préférentiellement d'au moins 10 000 mPa.s, et
- étape 2: le mélange est broyé éventuellement après un malaxage jusqu'à obtenir un mélange homogène qui est le système catalytique **X.**

15. Système catalytique **X** selon la revendication 14 **caractérisé en ce que**
a) le système catalytique **X** comprend au moins un complexe ou sel métallique **A** de formule **(2)** suivante:
[Zn (L¹)ᵣ₁ (L²)ᵣ₂] **(2)**
dans laquelle:
- r1 = 1 ou 2 et r2= 0 ou 1; avec rl+r2 = 2,
- le symbole L¹ représente un ligand qui est un anion β-dicarbonylato ou l'anion énolate d'un composé β-dicarbonylé et lorsque r1 = 2, les symboles L¹ sont identiques ou différents, et
- le symbole L² représente un ligand anionique qui est différent de L¹.

16. Utilisation d'un système catalytique **X** tel que défini selon l'une quelconque des revendications 1 à 8 ou 14 à 15 comme catalyseur de la réaction de polycondensation d'organopolysiloxanes.

17. Joint autoadhérent et/ou colle préparés par durcissement à température ambiante :
- d'une composition organopolysiloxanique telle que définie selon l'une quelconque des revendications 1 à 9 ou 11 à 12, ou
- d'une composition organopolysiloxanique issue du mélange des parties **P1** et **P2** du système bicomposant tel que défini selon la revendication 10.

## Claims

1. Organopolysiloxane composition, **characterized in that** it comprises, on the one hand, a silicone base **B** capable of curing via polycondensation reaction into a silicone elastomer and, on the other hand, a catalytically effective amount of at least one catalyst system **X, characterized in that**:
a) the catalyst system **X** comprises at least one metal complex or salt **A** of formula **(1)** below:
[Zn (L¹)ᵣ₁ (L²)ᵣ₂ (Y)ₓ] **(1)**
in which:
- r1 = 1 or 2, r2 = 0 or 1 and x = 0 or 1;
- the symbol L¹ represents a ligand which is a β-dicarbonylato anion or the enolate anion of a β-dicarbonyl-containing compound and, when r1 = 2, the symbols L¹ are identical or different,
- the symbol L² represents an anionic ligand which is different from L¹ and
- the symbol Y represents a neutral ligand, and
b) the catalyst system **X** is prepared according to the following process:
- step 1: the metal complex or salt **A** is dispersed in at least one oily organopolysiloxane polymer **K,** the viscosity of which is at least 100 mPa.s, preferably at least 5000 mPa.s and more preferably still at least 10 000 mPa.s, and
- step 2: the mixture is milled, optionally after kneading, until a homogeneous mixture is obtained, which is the catalyst system **X.**

2. Organopolysiloxane composition according to Claim 1, **characterized in that** the milling is carried out by means of a 3-roll mill, for which the clamping pressures between the rolls are adjusted so as to result in a homogeneous mixture.

3. Organopolysiloxane composition according to Claim 1 or 2, **characterized in that** the catalyst system **X** comprises at least one metal complex or salt **A** of formula **(2)** below:
[Zn (L¹)ᵣ₁ (L²)ᵣ₂] **(2)**
in which:
- r1 = 1 or 2 and r2 = 0 or 1; where r1+ r2 = 2;
- the symbol L¹ represents a ligand which is a β-dicarbonylato anion or the enolate anion of a β-dicarbonyl-containing compound and, when r1 - 2, the symbols L¹ are identical or different, and
- the symbol L² represents an anionic ligand which is different from L¹.

4. Organopolysiloxane composition according to Claim 3, **characterized in that** it comprises, on the one hand, a silicone base **B** capable of curing via polycondensation reaction into a silicone elastomer and, on the other hand, a catalytically effective amount of at least one polycondensation catalyst which is a metal complex or salt **A** chosen from the group constituted by the complexes of formulae **(3)** to **(6)** below:
(3) : [Zn (*t-Bu-acac*)₂] where *(t-Bu-acac)* = the 2,2,6,6-tetramethyl-3,5-heptanedionato anion or the enolate anion of 2,2,6,6-tetramethyl-3,5-heptanedione;
(4): [Zn (2,4-pentanedionato)₂];
(5): [Zn (3,5-heptanedionato)₂]; and
(6): [Zn (2,6-dimethyl-3,5 heptanedionato)₂].

5. Organopolysiloxane composition according to any one of Claims 1 to 3, **characterized in that** the β-dicarbonylato ligand L¹ is a β-diketonato anion derived from a β-diketone or a β-ketoesterato anion derived from a β-keto ester of the following formula:
R¹COCHR²COR³ **(7)**
in which:
- R¹ represents a substituted or unsubstituted, linear or branched C₁-C₃₀ hydrocarbon-based radical or a substituted or unsubstituted aromatic,
- R² is a hydrogen or a hydrocarbon-based, in general alkyl, radical advantageously having at most 4 carbon atoms;
- R³ represents a substituted or unsubstituted, linear, cyclic or branched C₁-C₃₀ hydrocarbon-based radical, a substituted or unsubstituted aromatic, or an -OR⁴ radical where R⁴ represents a substituted or unsubstituted, linear, cyclic or branched C₁-C₃₀ hydrocarbon-based radical, where
- R¹ and R² may be joined together to form a ring, and
- R² and R⁴ may be joined together to form a ring.

6. Organopolysiloxane composition according to Claim 5, **characterized in that** the β-diketone of formula **(7)** is chosen from the group constituted by the following β-diketones: 2,4-pentanedione (*acac*); 2,4-hexanedione; 2,4-heptanedione; 3,5-heptanedione; 3-ethyl-2,4-pentanedione; 5-methyl-2,4-hexanedione; 2,4-octanedione; 3,5-octanedione; 5,5-dimethyl-2,4-hexanedione; 6-methyl-2,4-heptanedione; 2,2-dimethyl-3,5-nonanedione; 2,6-dimethyl-3,5-heptanedione; 2-acetylcyclohexanone (*Cy-acac*); 2,2,6,6-tetramethyl-3,5-heptanedione (*t-Bu-acac*); 1,1,1,5,5,5-hexafluoro-2,4-pentanedione (*F-acac*); benzoylacetone; dibenzoylmethane; 3-methyl-2,4-pentadione; 3-acetyl-2-pentanone; 3-acetyl-2-hexanone; 3-acetyl-2-heptanone; 3-acetyl-5-methyl-2-hexanone; stearoyl benzoyl methane; octanoyl benzoyl methane; 4-*t*-butyl-4'-methoxydibenzoylmethane; 4,4'-dimethoxydibenzoylmethane and 4,4'-di-*tert*-butyldibenzoylmethane.

7. Organopolysiloxane composition according to any one of Claims 1 to 3, **characterized in that** L² is an anionic ligand selected from the group constituted by the following anions: fluoro (F⁻), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tetraoxochlorato(1⁻) (CIO₄)⁻, hydroxido (OH)⁻, mercapto (SH)⁻, selanido (SeH)⁻, hyperoxo (O₂)⁻, ozonido (O₃)⁻, hydroxo (OH⁻), hydrodisulfido (HS₂)⁻, methoxo (CH₃O)⁻, ethoxo (C₂H₅O)⁻, propoxido (C₃H₇O)⁻, methylthio (CH₃S)⁻, ethanethiolato (C₂H₅S)⁻ , 2-chloroethanolato (C₂H₄CIO)⁻, phenoxido (C₆H₅O)⁻, phenylthio (C₆H₅S)⁻, 4-nitrophenolato [C₆H₄(NO₂)O]⁻, formato (HCO₂)⁻, acetato (CH₃CO₂)⁻, propionato (CH₃CH₂CO₂)⁻, nitrido (N₃)⁻, cyano (CN)⁻, cyanato (NCO)⁻, thiocyanato (NCS)⁻, selenocyanato (NCSe)⁻, amido (NH₂)⁻, phosphino (PH₂)⁻, chloroazanido (CIHN)⁻, dichloroazanido (Cl₂N)⁻, [methanaminato(1⁻)] (CH₃NH)⁻, diazenido (HN=N)⁻, diazanido (H₂N-NH)⁻, diphosphenido (HP=P)⁻, phosphonito (H₂PO)⁻, phosphinato (H₂PO₂)⁻, carboxylato, enolato, amides, alkylato and arylato.

8. Organopolysiloxane composition according to any one of Claims 1 to 3, **characterized in that** L² is an anionic ligand selected from the group constituted by the following anions: acetate, oxalate, propionate, butyrate, isobutyrate, diethylacetate, benzoate, 2-ethylhexanoate, stearate, methoxide, ethoxide, isopropoxide, *tert*-butoxide, *tert*-pentoxide, 8-hydroxyquinolinate, naphthenate and tropolonate.

9. Organopolysiloxane composition according to any one of the preceding claims, **characterized in that** it also comprises a catalytically effective amount of at least one catalyst system **X** as described according to any one of the preceding claims and a silicone base **B** comprising:
- at least one polyorganosiloxane oil **C** capable of crosslinking via polycondensation into an elastomer;
- optionally at least one crosslinking agent **D;**
- optionally at least one adhesion promoter **E;** and
- optionally at least one siliceous, organic and/or non-siliceous mineral filler **F.**

10. Two-component system that is a precursor of the organopolysiloxane composition as defined according to Claim 9 that can be vulcanized to a silicone elastomer via polycondensation reactions, **characterized in that** it is in two separate parts **P1** and **P2** intended to be mixed in order to form said composition, and **in that** one of these parts comprises:
- the catalyst system **X** as defined according to any one of Claims 1 to 8 as a catalyst for the polycondensation reaction of organopolysiloxanes, and
- the crosslinking agent **D** or the polyorganosiloxane oil(s) **C** capable of crosslinking via polycondensation into an elastomer,
whilst the other part is free of the aforementioned species.

11. Single-component polyorganosiloxane composition that is stable during storage in the absence of moisture and that crosslinks, in the presence of water, into an elastomer, **characterized in that** it comprises:
- at least one crosslinkable linear polyorganopolysiloxane that has functionalized ends of alkoxy, oxime, acyl and/or enoxy type, preferably alkoxy type;
- a filler; and
- the catalyst system **X** as defined according to any one of Claims 1 to 8.

12. Organopolysiloxane composition according to claim 9, that can be vulcanized to a silicone elastomer via polycondensation reactions in which:
(a) the silicone base **B** comprises:
- per 100 parts by weight of at least one polyorganosiloxane oil **C** capable of crosslinking via polycondensation, which is a reactive α,ω-dihydroxydiorganopolysiloxane polymer, the organic radicals of which are hydrocarbon-based radicals, preferably chosen from the group constituted by: alkyls having from 1 to 20 carbon atoms; cycloalkyls having from 3 to 8 carbon atoms; alkenyls having from 2 to 8 carbon atoms and cycloalkenyls having from 5 to 8 carbon atoms;
- from 0.1 to 60 parts by weight of at least one crosslinking agent **D** chosen from the group constituted by: polyalkoxysilanes, products originating from the partial hydrolysis of a polyalkoxysilane, and polyalkoxysiloxanes;
- from 0 to 60 parts by weight of an adhesion promoter **E;**
- from 0 to 250 parts by weight, preferably from 5 to 200 parts by weight, of at least one siliceous, organic and/or non-siliceous mineral filler **F;**
- from 0.001 to 10 parts by weight of water;
- from 0 to 100 parts by weight of at least one nonreactive linear polyorganosiloxane polymer **G** consisting of a linear homopolymer or copolymer, of which, per molecule, the monovalent organic substituents, which are identical to or different from one another and which are bonded to the silicon atoms, are chosen from alkyl, cycloalkyl, alkenyl, aryl, alkylarylene and arylalkylene radicals;
- from 0 to 20 parts by weight of a coloring base or of a coloring agent **H;**
- from 0 to 70 parts by weight of polyorganosiloxane resins **I;** and
- from 0 to 20 parts of auxiliary additives **J** known to a person skilled in the art, such as plasticizers, crosslinking retardants, mineral oils, antimicrobial agents or heat stabilizers, such as titanium, iron or cerium oxides; and
(b) from 0.1 to 50 parts by weight of the catalyst system **X** as defined according to any one of Claims 1 to 8.

13. Elastomer that has good heat resistance and is obtained by crosslinking and curing of the two-component system according to Claim 10, or of the composition as defined according to any one of Claims 1 to 9 or 11 to 12.

14. Catalyst system **X characterized in that**:
a) the catalyst system **X** comprises at least one metal complex or salt **A** of formula **(1)** below:
[Zn (L¹)ᵣ₁ (L²)ᵣ₂ (Y)ₓ] **(1)**
in which:
- r1 ≥ 1, and r2 = 0 or 1 and x = 0 or 1;
- the symbol L¹ represents a ligand which is a β-dicarbonylato anion or the enolate anion of a β-dicarbonyl-containing compound and, when r1 = 2, the symbols L¹ are identical or different,
- the symbol L² represents an anionic ligand which is different from L¹, and
- the symbol Y represents a neutral ligand, and
b) the catalyst system **X** is prepared according to the following process:
- step 1: the metal complex or salt **A** is dispersed in at least one oily organopolysiloxane polymer **K,** the viscosity of which is at least 100 mPa.s, preferably at least 5000 mPa.s and more preferably still at least 10 000 mPa.s, and
- step 2: the mixture is milled, optionally after kneading, until a homogeneous mixture is obtained, which is the catalyst system **X.**

15. Catalyst system **X** according to Claim 14, **characterized in that**:
a) the catalyst system **X** comprises at least one metal complex or salt **A** of formula **(2)** below:
[Zn (L¹)ᵣ₁ (L²)ᵣ₂] **(2)**
in which:
- r1 = 1 or 2 and r2 = 0 or 1; where r1+ r2 = 2;
- the symbol L¹ represents a ligand which is a β-dicarbonylato anion or the enolate anion of a β-dicarbonyl-containing compound and, when r1 = 2, the symbols L¹ are identical or different, and
- the symbol L² represents an anionic ligand which is different from L¹.

16. Use of a catalyst system **X** as defined according to any one of Claims 1 to 8 or 14 to 15 as a catalyst for the polycondensation reaction of organopolysiloxanes.

17. Self-adhesive seal and/or adhesive, prepared by curing, at ambient temperature:
- of an organopolysiloxane composition as defined according to any one of Claims 1 to 9 or 11 to 12, or
- of an organopolysiloxane composition resulting from the mixing of the parts **P1** and **P2** of the two-component system as defined according to Claim 10.

## Patentansprüche

1. Organopolysiloxanzusammensetzung, **dadurch gekennzeichnet, dass** sie einerseits eine Silikonbasis **B,** die durch Polykondensationsreaktion zu einem Silikonelastomer gehärtet werden kann, und andererseits eine katalytisch wirksame Menge mindestens eines Katalysatorsystems **X** umfasst, **dadurch gekennzeichnet, dass**
a) das Katalysatorsystem **X** mindestens einen Metallkomplex oder ein Metallsalz **A** der folgenden Formel **(1)** umfasst:
[Zn (L¹)ᵣ₁ (L²)ᵣ₂ (Y)ₓ] **(1)**
worin:
- r1 = 1 oder 2, r2 = 0 oder 1 und x = 0 oder 1;
- das Symbol L¹ für einen Liganden steht, bei dem es sich um ein β-Dicarbonylato-Anion oder Enolat-Anion einer β-Dicarbonylverbindung handelt, und dann, wenn r1 = 2, die Symbole L¹ gleich oder verschieden sind,
- das Symbol L² für einen anionischen Liganden steht, der von L¹ verschieden ist, und
- das Symbol Y für einen neutralen Liganden steht, und
b) das Katalysatorsystem **X** gemäß dem folgenden Verfahren hergestellt wird:
- Schritt 1: der Metallkomplex oder das Metallsalz **A** wird in mindestens einem öligen Organopolysiloxanpolymer **K,** dessen Viskosität mindestens 100 mPa.s, vorzugsweise mindestens 5000 mPa.s und noch weiter bevorzugt mindestens 10.000 mPa.s beträgt, dispergiert, und
- Schritt 2: die Mischung wird gegebenenfalls nach Kneten gemahlen, bis man eine homogene Mischung erhält, bei der es sich um das Katalysatorsystem **X** handelt.

2. Organopolysiloxanzusammensetzung nach Anspruch 1, **dadurch gekennzeichnet, dass** das Mahlen mit Hilfe eines Dreiwalzenstuhls durchgeführt wird, wobei die Klemmdrücke zwischen den Walzen so eingestellt werden, dass sich eine homogene Mischung ergibt.

3. Organopolysiloxanzusammensetzung nach Anspruch 1 oder 2, **dadurch gekennzeichnet, dass** das Katalysatorsystem **X** mindestens einen Metallkomplex oder ein Metallsalz **A** der folgenden Formel **(2)** umfasst:
[Zn (L¹)ᵣ₁ (L²)ᵣ₂] **(2)**
worin:
- r1 = 1 oder 2 und r2 = 0 oder 1; wobei r1 + r2 = 2;
- das Symbol L¹ für einen Liganden steht, bei dem es sich um ein β-Dicarbonylato-Anion oder Enolat-Anion einer β-Dicarbonylverbindung handelt, und dann, wenn r1 = 2, die Symbole L¹ gleich oder verschieden sind, und
- das Symbol L² für einen anionischen Liganden steht, der von L¹ verschieden ist.

4. Organopolysiloxanzusammensetzung nach Anspruch 3, **dadurch gekennzeichnet, dass** sie einerseits eine Silikonbasis **B,** die durch Polykondensationsreaktion zu einem Silikonelastomer gehärtet werden kann, und andererseits eine katalytisch wirksame Menge mindestens eines Polykondensationskatalysators, bei dem es sich um einen Metallkomplex oder ein Metallsalz **A** aus der Gruppe bestehend aus den Komplexen der folgenden Formeln **(3)** bis **(6)** handelt:
(3) : [Zn (*t-Bu-acac*)₂], wobei *(t-Bu-acac) =* das 2,2,6,6-Tetramethyl-3,5-heptandionato-Anion oder das Enolat-Anion von 2,2,6,6-Tetramethyl-3,5-heptandion;
(4): [Zn(2,4-Pentandionato)₂];
(5): [Zn(3,5-Heptandionato)₂] und
(6): [Zn(2,6-Dimethyl-3,5 heptandionato)₂]_{,} umfasst.

5. Organopolysiloxanzusammensetzung nach einem der Ansprüche 1 bis 3, **dadurch gekennzeichnet, dass** es sich bei dem β-Dicarbonylato-Liganden L¹ um ein β-Diketonato-Anion, das sich von einem β-Diketon ableitet, oder ein β-Ketoesterato-Anion, das sich von einem β-Ketoester der folgenden Formel ableitet:
R¹COCHR²COR³ **(7)**
worin:
- R¹ für einen substituierten oder unsubstituierten, linearen oder verzweigten C₁-C₃₀-Kohlenwasserstoffrest oder einen substituierten oder unsubstituierten Aromaten steht,
- R² für Wasserstoff oder einen Kohlenwasserstoffrest, im Allgemeinen Alkylrest, der vorteilhafterweise höchstens 4 Kohlenstoffatome aufweist, steht,
- R³ für einen substituierten oder unsubstituierten, linearen, cyclischen oder verzweigten C₁-C₃₀-Kohlenwasserstoffrest oder einen substituierten oder unsubstituierten Aromaten oder einen Rest -OR⁴ steht, wobei R⁴ für einen substituierten oder unsubstituierten, linearen, cyclischen oder verzweigten C₁-C₃₀-Kohlenwasserstoffrest steht, wobei
- R¹ und R² zu einem Ring verbunden sein können und
- R² und R⁴ zu einem Ring verbunden sein können, handelt.

6. Organopolysiloxanzusammensetzung nach Anspruch 5, **dadurch gekennzeichnet, dass** das β-diketon der Formel **(7)** aus der Gruppe bestehend aus den folgenden β-Diketonen ausgewählt ist: 2,4-Pentandion *(acac);* 2,4-Hexandion; 2,4-Heptandion; 3,5-Heptandion; 3-Ethyl-2,4-pentandion; 5-Methyl-2,4-hexandion; 2,4-Octandion; 3,5-Octandion; 5,5-Dimethyl-2,4-hexandion; 6-Methyl-2,4-heptandion; 2,2-Dimethyl-3,5-nonandion; 2,6-Dimethyl-3,5-heptandion; 2-Acetylcyclohexanon *(Cy-acac);* 2,2,6,6-Tetramethyl-3,5-heptandion *(t-Bu-acac);* 1,1,1,5,5,5-Hexafluor-2,4-pentandion *(F-acac);* Benzoylaceton; Dibenzoylmethan; 3-Methyl-2,4-pentadion; 3-Acetyl-2-pentanon; 3-Acetyl-2-hexanon; 3-Acetyl-2-heptanon; 3-Acetyl-5-methyl-2-hexanon; Stearoylbenzoylmethan; Octanoylbenzoylmethan; 4-*t*-Butyl-4'-methoxydibenzoylmethan; 4,4'-Dimethoxydibenzoylmethan und 4,4'-Di-*tert.*-butyldibenzoylmethan.

7. Organopolysiloxanzusammensetzung nach einem der Ansprüche 1 bis 3, **dadurch gekennzeichnet, dass** es sich bei L² um einen anionischen Liganden handelt, der aus der Gruppe der folgenden Anionen ausgewählt ist: Fluoro (F⁻), Chloro (Cl⁻), Triiodo(1⁻) (I₃)⁻, Difluorochlorato(1⁻) [ClF₂]⁻, Hexafluoroiodato(1⁻) [IF₆]⁻, Oxochlorato(1⁻) (ClO)⁻, Dioxochlorato(1⁻) (ClO₂)⁻, Trioxochlorato(1⁻) (ClO₃)⁻, Tetraoxochlorato(1⁻) (ClO₄)⁻, Hydroxo (OH)⁻, Mercapto (SH)⁻, Selanido (SeH)⁻, Hyperoxo (O₂)⁻, Ozonido (O₃)⁻, Hydroxo (OH⁻), Hydrodisulfido (HS₂)⁻, Methoxo (CH₃O)⁻, Ethoxo (C₂H₅O)⁻, Propoxido (C₃H₇O)⁻, Methylthio (CH₃S)⁻, Ethanthiolato (C₂H₅S)⁻, 2-Chloroethanolato (C₂H₄ClO)⁻, Phenoxido (C₆H₅O)⁻, Phenylthio (C₆H₅S)⁻, 4-Nitrophenolato [C₆H₄(NO₂)O]⁻, Formiato (HCO₂)⁻, Acetato (CH₃CO₂)⁻, Propionato (CH₃CH₂CO₂)⁻ , Nitrido (N₃)⁻, Cyano (CN)⁻, Cyanato (NCO)⁻, Thiocyanato (NCS)⁻, Selenocyanato (NCSe)⁻, Amido (NH₂)⁻, Phosphino (PH₂)⁻, Chloroazanido (ClHN)⁻, Dichloroazanido (Cl₂N)⁻, [Methanaminato(1⁻)] (CH₃NH)⁻, Diazenido (HN=N)⁻, Diazanido (H₂N-NH)⁻, Diphosphenido (HP=P)⁻, Phosphonito (H₂PO)⁻, Phosphinato (H₂PO₂)⁻, Carboxylato, Enolato, Amiden, Alkylato und Arylato.

8. Organopolysiloxanzusammensetzung nach einem der Ansprüche 1 bis 3, **dadurch gekennzeichnet, dass** es sich bei L² um einen anionischen Liganden handelt, der aus der Gruppe der folgenden Anionen ausgewählt ist: Acetat, Oxalat, Propionat, Butyrat, Isobutyrat, Diethylacetat, Benzoat, 2-Ethylhexanoat, Stearat, Methoxid, Ethoxid, Isopropoxid, tert.-Butoxid, *tert*.-Pentoxid, 8-Hydroxychinolinat, Naphthenat und Tropolonat.

9. Organopolysiloxanzusammensetzung nach einem der vorhergehenden Ansprüche, **dadurch gekennzeichnet, dass** sie außerdem eine katalytisch wirksame Menge mindestens eines Katalysatorsystems **X** gemäß einem der vorhergehenden Ansprüche und eine Silikonbasis **B,** umfassend:
- mindestens ein Polyorganosiloxanöl **C,** das durch Polykondensation zu einem Elastomer vernetzt werden kann;
- gegebenenfalls mindestens ein Vernetzungsmittel **D;**
- gegebenenfalls mindestens einen Haftvermittler **E** und
- gegebenenfalls mindestens einen siliciumhaltigen, organischen und/oder nicht siliciumhaltigen mineralischen Füllstoff **F,**
umfasst.

10. Zweikomponentensystem, das einen Vorläufer für die Organopolysiloxanzusammensetzung gemäß Anspruch 9 darstellt und durch Polykondensationsreaktionen zu einem Silikonelastomer vulkanisierbar ist und **dadurch gekennzeichnet ist, dass** es zwei verschiedene Teile **P1** und **P2,** die zum Mischen zur Bildung der Zusammensetzung vorgesehen sind, aufweist und einer dieser Teile:
- das Katalysatorsystem **X** gemäß einem der Ansprüche 1 bis 8 als Katalysator für die Polykondensation von Organopolysiloxanen und
- das Vernetzungsmittel **D** oder Polyorganosiloxanöl bzw. die Polyorganosiloxanöle **C,** das bzw. die durch Polykondensation zu einem Elastomer vernetzt werden können,
umfasst, wohingegen der andere Teil von den oben angegebenen Spezies frei ist.

11. Einkomponentige Polyorganosiloxanzusammensetzung, die in Abwesenheit von Feuchtigkeit lagerstabil ist und in Gegenwart von Wasser zu einem Elastomer vernetzt, **dadurch gekennzeichnet, dass** sie:
- mindestens ein vernetzbares lineares Polyorganosiloxan, das funktionalisierte Enden vom Alkoxy-, Oxim-, Acyl- und/oder Enoxy-Typ, vorzugsweise vom Alkoxy-Typ, aufweist,
- einen Füllstoff und
- das Katalysatorsystem **X** gemäß einem der Ansprüche 1 bis 8
umfasst.

12. Organopolysiloxanzusammensetzung nach Anspruch 9, die durch Polykondensationsreaktionen zu einem Silikonelastomer vulkanisierbar ist, wobei:
(a) die Silikonbasis **B** Folgendes umfasst:
- auf 100 Gewichtsteile mindestens eines Polyorganosiloxanöls **C,** das durch Polykondensation vernetzt werden kann, wobei es sich um ein reaktives α,ω-Dihydroxydiorganopolysiloxanpolymer, bei dessen organischen Resten es sich um Kohlenwasserstoffreste handelt, vorzugsweise ausgewählt aus der Gruppe bestehend aus Alkylgruppen mit 1 bis 20 Kohlenstoffatomen; Cycloalkylgruppen mit 3 bis 8 Kohlenstoffatomen; Alkenylgruppen mit 2 bis 8 Kohlenstoffatomen und Cycloalkenylgruppen mit 5 bis 8 Kohlenstoffatomen;
- 0,1 bis 60 Gewichtsteile mindestens eines Vernetzungsmittels **D** aus der Gruppe bestehend aus Polyalkoxysilanen, Produkten der Partialhydrolyse eines Polyalkoxysilans und Polyalkoxysiloxanen;
- 0 bis 60 Gewichtsteile eines Haftvermittlers **E;**
- 0 bis 250 Gewichtsteile, vorzugsweise 5 bis 200 Gewichtsteile, mindestens eines siliciumhaltigen, organischen und/oder nicht siliciumhaltigen mineralischen Füllstoffs **F;**
- 0,001 bis 10 Gewichtsteile Wasser,
- 0 bis 100 Gewichtsteile mindestens eines unreaktiven linearen Polyorganosiloxanpolymers, das aus einem linearen Homopolymer oder Copolymer besteht, wobei die einwertigen organischen Substituenten, die gleich oder voneinander verschieden sind und an Siliciumatome gebunden sind, pro Molekül aus Alkyl-, Cycloalkyl-, Alkenyl-, Aryl-, Alkylarylen- und Arylalkylenresten ausgewählt sind,
- 0 bis 20 Gewichtsteile einer Farbbasis oder eines Farbmittels **H,**
- 0 bis 70 Gewichtsteile Polyorganosiloxanharze **I** und
- 0 bis 20 Teile Hilfsadditive **J,** die dem Fachmann bekannt sind, wie Weichmacher, Vernetzungsverzögerer, Mineralöle, antimikrobielle Mittel, Wärmebeständigkeitsadditive wie Titan-, Eisen- oder Ceroxide, und
(b) 0,1 bis 50 Gewichtsteile des Katalysatorsystems **X** gemäß einem der Ansprüche 1 bis 8.

13. Elastomer mit guter Wärmebeständigkeit, erhalten durch Vernetzung und Härtung des Zweikomponentensystems nach Anspruch 10 oder der Zusammensetzung gemäß einem der Ansprüche 1 bis 9 oder 11 bis 12.

14. Katalysatorsystem **X, dadurch gekennzeichnet, dass**
a) das Katalysatorsystem **X** mindestens einen Metallkomplex oder ein Metallsalz **A** der folgenden Formel **(1)** umfasst:
[Zn (L¹)ᵣ₁ (L²)ᵣ₂ (Y)ₓ] **(1)**
worin:
- r1 ≥ und r2 = 0 oder 1 und x = 0 oder 1;
- das Symbol L¹ für einen Liganden steht, bei dem es sich um ein β-Dicarbonylato-Anion oder Enolat-Anion einer β-Dicarbonylverbindung handelt, und dann, wenn r1 = 2, die Symbole L¹ gleich oder verschieden sind,
- das Symbol L² für einen anionischen Liganden steht, der von L¹ verschieden ist, und
- das Symbol Y für einen neutralen Liganden steht, und
b) das Katalysatorsystem **X** gemäß dem folgenden Verfahren hergestellt wird:
- Schritt 1: der Metallkomplex oder das Metallsalz **A** wird in mindestens einem öligen Organopolysiloxanpolymer **K,** dessen Viskosität mindestens 100 mPa.s, vorzugsweise mindestens 5000 mPa.s und noch weiter bevorzugt mindestens 10.000 mPa.s beträgt, dispergiert, und
- Schritt 2: die Mischung wird gegebenenfalls nach Kneten gemahlen, bis man eine homogene Mischung erhält, bei der es sich um das Katalysatorsystem **X** handelt.

15. Katalysatorsystem **X** nach Anspruch 14, **dadurch gekennzeichnet, dass**
a) das Katalysatorsystem **X** mindestens einen Metallkomplex oder ein Metallsalz **A** der folgenden Formel **(2)** umfasst:
[Zn (L¹)ᵣ₁ (L²)ᵣ₂] **(2)**
worin:
- r1 = 1 oder 2 und r2 = 0 oder 1; wobei r1 + r2 = 2;
- das Symbol L¹ für einen Liganden steht, bei dem es sich um ein β-Dicarbonylato-Anion oder Enolat-Anion einer β-Dicarbonylverbindung handelt, und dann, wenn r1 = 2, die Symbole L¹ gleich oder verschieden sind, und
- das Symbol L² für einen anionischen Liganden steht, der von L¹ verschieden ist.

16. Verwendung des Katalysatorsystems **X** gemäß einem der Ansprüche 1 bis 8 oder 14 bis 15 als Katalysator für die Polykondensationsreaktion von Organopolysiloxanen.

17. Selbstklebende Dichtung und/oder Klebstoff, hergestellt durch Härtung
- einer Organopolysiloxanzusammensetzung gemäß einem der Ansprüche 1 bis 9 oder 11 bis 12 oder
- einer sich aus dem Mischen der Teile **P1** und **P2** des Zweikomponentensystems gemäß Anspruch 10 ergebenden Organopolysiloxanzusammensetzung bei Umgebungstemperatur.
